# EUROPEAN PATENT APPLICATION

(11) **EP 2 560 364 A1**
(43) Date of publication of application: **20.02.2013**
(21) Application number: 11006711.3
(22) Date of filing: 17.08.2011
(51) Int. Cl.: H04N 5/225, H04N 5/232

(54) **Driver assisting system and method for a motor vehicle**

(71) Applicant: Autoliv Development AB, 44783 Vårgårda (SE)
(72) Inventor: Hedberg, Ognjan, 58222 Linköping (SE); Hammerström, Per Jonas, 58337 Linköping (SE); Knutsson, Per, 58220 Linköping (SE)
(74) Representative: Müller Verweyen

(57) **Abstract**

A driver assisting system (10) for a motor vehicle comprises an imaging device (11) with an optical filter device (17) and an electronic control means (15). The optical filter device (17) is controllable by said electronic control means (15) in order to change its spectral characteristic. Thereby, different image information is available in different spectral regions. Altogether more spectral information is available with a standard image sensor.

## Description

The invention relates to a driver assisting system for a motor vehicle, comprising an imaging device with an optical filter device and an electronic control means. Furthermore, the invention relates to a corresponding driver assisting method.

Such systems are generally known. For example, US 2010 134616 A1 discloses a high beam assistant comprising a camera with an image sensor having a color filter mask.

Most camera systems require spectral cut-off filters to maintain sharp images. Therefore, only pre-defined spectral frequencies are passed to the sensor and any image information in the cut-off frequency regions is lost.

The object of the invention is to provide a reliable and cost-efficient driver assisting system and method for a motor vehicle providing improved imaging information.

The invention solves this object with the features of the independent claims. According to the invention, a driver assisting system for a motor vehicle comprises an imaging device with an optical filter device and an electronic control means. The optical filter device is controllable by said electronic control means in order to change the spectral characteristic of the optical filter device. Thereby, different image information is available in different spectral regions, while image sharpness is maintained. Altogether more image information is available according to the invention. Different spectral characteristics are used to extract relevant image information in different spectral regions, leading to an enhanced electronic image processing, and to a more reliable driver assisting system.

Preferably the spectral characteristics of said optical filter device are dynamically changeable during operation of the motor vehicle. This way it is possible to take account of different and/or changing conditions during operation influencing image quality. Multiple images with different spectral information can be taken in series and thus can be combined through image processing, allowing the extraction of additional image information out of a scene.

Preferably the optical filter device is part of an optics arrangement of the imaging device, in particular as a coating on an optical element like an optical lens. The optical filter device is inserted into the optical path and the incident light is filtered with changeable spectral characteristics of the optical filter device.

Alternatively the optical filter device may be positioned on an image sensor of the imaging device. In particular the optical filter device is provided on the image sensor surface, for example on the sensitive layer of the image sensor, or alternatively the optical filter device is attached to the image sensor housing. In particular a single optical filter device for the whole sensor area is possible. Alternatively it is possible to use a plurality of independent optical filter devices on one image sensor.

Preferably the optical filter device is individually controllable for each pixel of said image sensor or each group of pixel, which form a sub-area, on the image sensor by said electronic control means.

Preferably the optical filter device comprises at least one coating, which changes the optical properties in dependence of an electrical quantity, in particular applied electric voltage, field or current in order to control the spectral characteristics of the optical filter device.

Preferably the optical filter device comprises a liquid crystal filter, which is tunable in order to control the spectral characteristics of the optical filter device. Liquid crystal filters are easy to control, lightweight and have low power consumption and are thus suitable to applications in a motor vehicle.

Preferably the optical filter device comprises a dichroic filter, also called interference filter, which is suitable to filter incident light. A dichroic filter is favorable due to a wide area of possible filtering characteristics and it is not subject to bleaching. In particular the dichroic filter can be turned with respect to the angle of incident light path in order to change the spectral characteristics.

Preferably the optical filter device comprises a mechanical means, which is electrical controlled or operated, in order to put different filters in the optical path of the imaging device. In particular the mechanical means is a rotating device putting multiple filters with different spectral characteristics, respectively spectral transmittance, in the optical path.

Preferably a piezoelectric actuator is comprised in the optical filter device in any way in order to adjust or move parts of the optics of said optical filter device or of said imaging device, or to be used in an acousto-optic filter. Piezoelectric actuators give a fast and wearless movement, which is important for long lifetime and a high number of load cycles in conjunction with cyclic changes of filter characteristics.

Advantageously, the imaging device is optimized to work in different ambient conditions. The optical filter device is in particular adapted to be controlled by said electronic means dependent on the ambient conditions in order to gain higher image quality through suitable optical filtering.

Preferably the optical filtering is controlled in order to enhance image quality and image processing on basis of image information gained and processed by said driver assisting device. In particular the optical filter device is adjusted on basis of e.g. certain light conditions or certain objects in the field of view, rendering additional sensors unnecessary.

Preferably the optical filter device of the driver assisting device is controlled by a scheduled rule. Certain filtering conditions are set repetitively in series in order to obtain a certain series of images with different spectral characteristics to get a set of images with different spectral characteristics defined by said scheduled rule. Thus image processing can be optimized to take full advantage of the additional spectral information.

Applications of the invention relate to the detection of static objects, like lane detection and traffic sign detection, with different colours, like blue, yellow and/or red lane markings, or red, yellow and/or blue traffic signs.

In one application, the spectral characteristics of the optical filter device can be altered between an image more suitable to display to the driver, and another image more suitable for image processing algorithms. For instance it could be preferable to have all pixels clear in one frame for image processing, and RGB pixels in the next frame for convenient display to the driver.

In the following the invention shall be illustrated on the basis of preferred embodiments with reference to the accompanying drawings, wherein:
- Fig. 1: shows a schematic illustration of a driver assistance system for a motor vehicle; and
- Fig. 2: shows a schematic illustration of a driver assistance system for a motor vehicle with infrared light sources.

The driver assistance system 10 is mounted in a motor vehicle and comprises an imaging device 11 for recording images of a region surrounding the motor vehicle, for example a region in front of the motor vehicle. Preferably the imaging device 11 comprises one or more optical and/or infrared imaging devices 12, in particular cameras, where infrared covers near IR with wavelengths below 5 microns and/or far IR with wavelengths beyond 5 microns. Preferably the imaging device 11 comprises a plurality imaging devices 12 in particular forming a stereo imaging device 11; alternatively only one imaging device 11 forming a mono imaging means can be used.

Each camera 12a, 12b comprises an optics arrangement 20a, 20b and a two dimensional image sensor 21a, 21b, in particular an infrared and/or optical sensor, provided to convert incident infrared radiation and/or visible light transmitted through the camera 12a, 12b into an electrical signal containing image information of the detected scene.

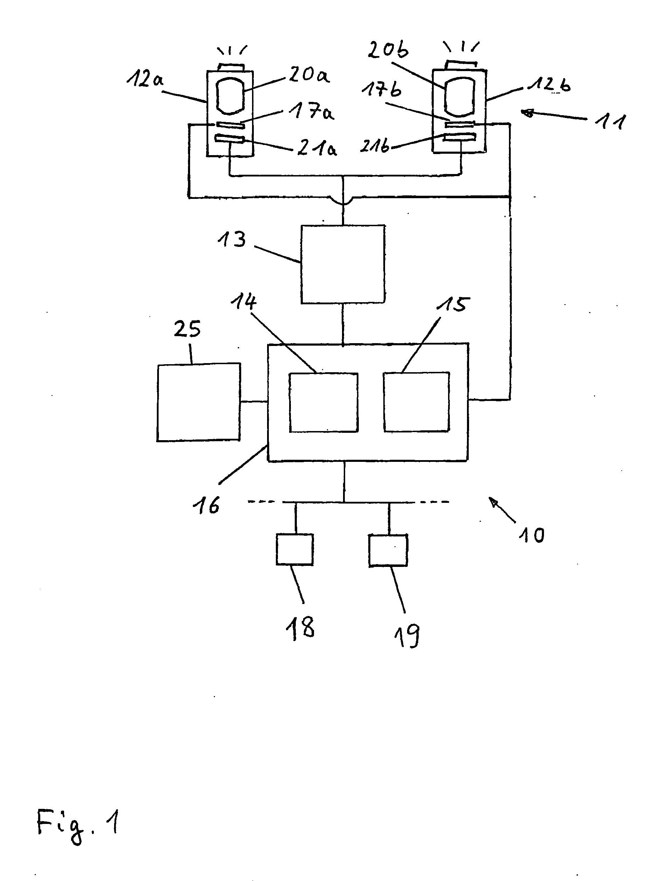

Furthermore, each camera 12a, 12b comprises an optical filter device 17a, 17b, which can be positioned in particular in front of the optics arrangement 20a, 20b or the camera 12a, 12b. Alternatively, the optical filter device 17a, 17b can be arranged between the optic arrangement 20a, 20b and the image sensor 21a, 21b like it is shown in Fig.1. Moreover, the optical filter device 17a, 17b can be arranged on or be a part of the image sensor 21a, 21b. In another embodiment the optical filter device 17a, 17b can be part of the optics arrangement 20a, 20b. The optical filter device 17a, 17b is not limited to a separate device, it may be comprised by another device. The optical filter device 17a, 17b may transmit, respectively filter, wavelengths from visible light to infrared light, respectively radiation.

The optical filter device 17a, 17b is adapted to be controlled by an electronic control means 15 in order to change the spectral characteristics of the optical filter device 17a, 17b, that means the spectral transmittance of the optical filter device 17a, 17b is varied by said electronic control means 15. Consequently, the incident infrared radiation or visible light of the imaging device 11 is spectrally filtered before it is detected by the image sensor 21a, 21b. Herein, optical filtering also comprises the possibility that the spectral characteristics of the optical filter device 17a, 17b are changed to the characteristics of a neutral density filter, also called gray filter, or to the characteristics of a clear filter, which does not or rarely absorb infrared radiation or visible light.

The electronic control means 15 may be realized by a dedicated hardware circuit or may be part of an electronic means 16, where processing and controlling is carried out by corresponding software.

The imaging device 11 is preferably coupled to an image pre-processor 13 adapted to control the capture of images by the imaging device 11, receive the electrical signal containing the image information from the image sensors 21a, 21b.

Furthermore, the pre-processor 13 warp pairs of left/ right images into alignment and/or create disparity images, which per se is known in the art. The image pre-processor 13 may be realized by a dedicated hardware circuit. Alternatively the pre-processor 13, or part of its functions, can be realized in an electronic means 16.

The pre-processed image data is then provided to the electronic processing means 14 where further image and data processing is carried out by corresponding software. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; activation or control of driver assistance means 18, 19, ... depending on the result of the object detection and tracking processing.

According to the invention image information in a specific wavelength range might only be available or clearly detectable if other wavelength ranges are removed or attenuated. Therefore the optical filter device 17a, 17b is set to different spectral characteristics and a set of images with different spectral characteristics is recorded. The image and data processing functions of the processing means 14 are carried out for the set of images, that means for all recorded images with different spectral information of the same scene. This enables to identify and classify objects, which could be poorly or not at all detected in certain images of the recorded set. In particular the identified object candidates, which are extracted from different elements of said recorded set of images of the same scene, are combined in any way by data processing in the electronic processing means 14 or the electronic means 16, leading to an improved objection detection and following tracking processing.

The gained additional information by data processing may also be used in particular to give a feedback to the electronic control means 15, which controls and optimizes the settings of the spectral characteristics of the optical filter device.

Expediently, the electronic processing means 14 has access to an electronic memory means 25. The driver assistance means 18, 19, ... may in particular comprise a display means 18 for displaying information relating to an identified object and/or to provide an optical collision warning to the driver.

The driver assistance means 18, 19, ... may further comprise a warning means 19 adapted to provide a collision warning to the driver by suitable optical, acoustical and/or haptical warning signals; one or more safety systems, in particular restraint systems such as occupant airbags or safety belt tensioners, pedestrian airbags, hood lifters and the like, and/or dynamic vehicle control systems such as brakes.

The electronic means 16 is preferably programmed or programmable and may comprise a microprocessor or micro-controller. The image pre-processor 13, the electronic processing means 14, the electronic control means 15 and the memory means 25 are preferably realised in an on-board electronic control unit (ECU) and may be connected to the imaging device 11 via a separate cable or alternatively via a vehicle data bus. In another embodiment the ECU and an imaging device 12 can be integrated into a single unit. All steps from imaging, image preprocessing, image processing to activation or control of driver assistance means 18, 19, ... are performed automatically and continuously during driving in real time.

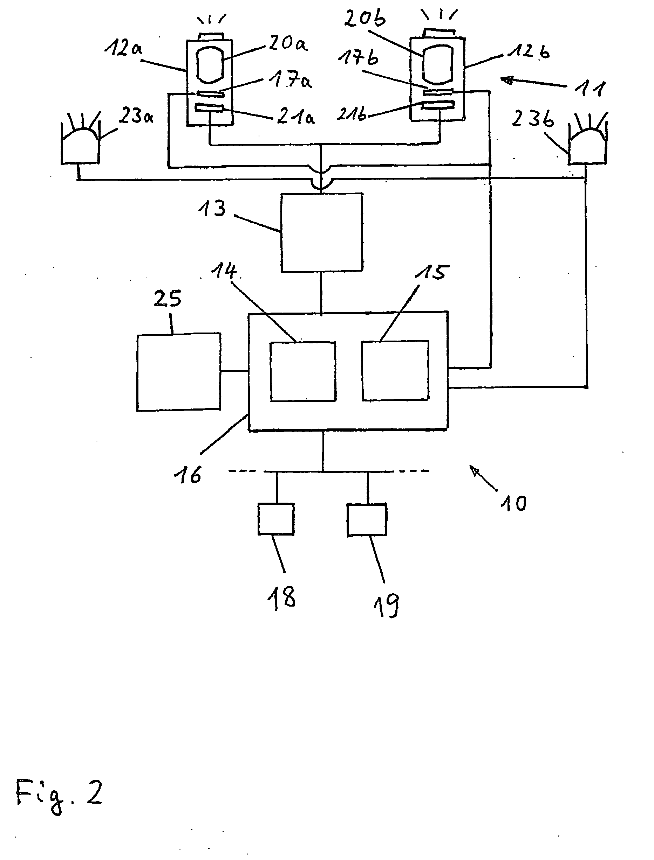

In the example of Fig. 2 a driver assisting system 10 for a motor vehicle with an optical filter device 17a, 17b is adapted to be controlled by said electronic control means 15 in accordance with at least one infrared light source 23a, 23b of said motor vehicle. The infrared light source 23a, 23b may be operated in particular in pulsed mode, wherein the optical filter device 17a, 17b is controlled to capture one or a plurality of images with different spectral characteristic during each on and off phase of said pulsed operation of the infrared light source 23a, 23b.

## Claims

1. A driver assisting system (10) for a motor vehicle, comprising an imaging device (11) with an optical filter device (17) and an electronic control means (15), **characterized in that** said optical filter device (17) is controllable by said electronic control means (15) in order to change the spectral characteristic of said optical filter device (17).

2. A driver assisting system (10) for a motor vehicle as claimed in claim 1, wherein the spectral characteristics of said optical filter device (17) are changed dynamically during operation of said motor vehicle.

3. A driver assisting system (10) for a motor vehicle as claimed in any one of the proceeding claims, wherein said optical filter device (17) is part of an optics arrangement (20) of said imaging device (11).

4. A driver assisting system (10) for a motor vehicle as claimed in any one of the proceeding claims, wherein said optical filter device (17) is on an image sensor (21) of said imaging device (11).

5. A driver assisting system (10) for a motor vehicle as claimed in any one of the proceeding claims, wherein said optical filter device (17) is individually controllable for single pixel or sub-areas of the image sensor (21) by said electronic control means (15).

6. A driver assisting system for a motor vehicle as claimed in any one of the proceeding claims, wherein said optical filter device (17) comprises a plurality of areas with different spectral characteristics.

7. A driver assisting system (10) for a motor vehicle as claimed in any one of the proceeding claims, wherein said optical filter device (17) comprises at least one coating, wherein the optical properties of said coating are sensitive to an applied electric voltage or electric current.

8. A driver assisting system (10) for a motor vehicle as claimed in any one of the proceeding claims, wherein said optical filter device (17) comprises a liquid crystal filter.

9. A driver assisting system (10) for a motor vehicle as claimed in any one of the proceeding claims, wherein said optical filter device (17) comprises a dichroic filter.

10. A driver assisting system (10) for a motor vehicle as claimed in any one of the proceeding claims, wherein said optical filter device (17) comprises a mechanical means to switch optical filters.

11. A driver assisting system (10) for a motor vehicle as claimed in any one of the proceeding claims, wherein said optical filter device (17) comprises a piezoelectric actuator.

12. A driver assisting system (10) for a motor vehicle as claimed in any one of the proceeding claims, wherein the said optical filter device (17) is adapted to be controlled by said electronic control means (15) dependent on the ambient conditions of the motor vehicle.

13. A driver assisting system (10) for a motor vehicle as claimed in any one of the proceeding claims, wherein the said optical filter device (17) is adapted to be controlled by said electronic control means (15) dependent on image information processed by electronic means (16).

14. A driver assisting system (10) for a motor vehicle as claimed in any one of the proceeding claims, wherein the said optical filter device (17) is adapted to be controlled by said electronic control means (15) dependent on a scheduling rule.

15. A filtering method for an imaging device (11) in a motor vehicle, wherein said imaging device (11) comprises an optical filter device (17) and an electronic control means (15), **characterized in that** said electronic control means (15) controls said optical filter device (17) in order to change the spectral characteristics of said optical filter device (17).
